# FASCICULE DE BREVET EUROPEEN

(11) **EP 2 753 481 B1**
(45) Date de publication et mention de la délivrance du brevet: **06.06.2018**
(21) Numéro de dépôt: 12759014.9
(22) Date de dépôt: 03.09.2012
(51) Int. Cl.: F01P 11/02, F24H 1/10, F24H 1/14, F24D 3/10, B60H 1/22, F24H 1/12, F24H 9/00

(54) **DISPOSITIF DE CHAUFFAGE ELECTRIQUE POUR VEHICULE AUTOMOBILE, ET APPAREIL DE CHAUFFAGE ET/OU DE CLIMATISATION ASSOCIE**
ELEKTRISCHE HEIZVORRICHTUNG FÜR EIN KRAFTFAHRZEUG UND ZUGEHÖRIGE KLIMA- UND/ODER HEIZEINHEIT
ELECTRICAL HEATING DEVICE FOR A MOTOR VEHICLE AND ASSOCIATED AIR-CONDITIONING AND/OR HEATING UNIT

(30) Priorité: 06.09.2011 FR 1102696
(43) Date de publication de la demande: 16.07.2014
(73) Titulaire: Valeo Systemes Thermiques, 78321 Le Mesnil Saint Denis (FR)
(72) Inventeur: PIERRON, Frédéric, F-78120 Rambouillet (FR); TELLIER, Laurent, F-75116 Paris (FR); LEBORGNE, José, F-28600 Luisant (FR)
(74) Mandataire: Tran, Chi-Hai
(86) Numéro de dépôt international: PCT/EP2012/003678
(87) Numéro de publication internationale: WO 2013/034269

(56) Documents cités:
- WO-A1-2010/021939
- WO-A2-2011/054970
- GB-A- 199 967
- US-A- 1 766 068
- US-A- 3 209 126
- US-A- 6 053 132

## Description

L'invention concerne un dispositif de chauffage électrique pour véhicule automobile. L'invention s'applique plus particulièrement aux appareils de chauffage et/ou climatisation de véhicules automobiles.

De façon habituelle, le réchauffage de l'air destiné au chauffage de l'habitacle d'un véhicule automobile, ainsi qu'au désembuage et au dégivrage est assuré par passage d'un flux d'air à travers un échangeur de chaleur, plus précisément par un échange de chaleur entre le flux d'air et un liquide.

En général, il s'agit du liquide de refroidissement dans le cas d'un moteur thermique.

Toutefois, ce mode de chauffage peut s'avérer inadapté ou insuffisant pour garantir un chauffage rapide et efficace de l'habitacle du véhicule, en particulier pour assurer un réchauffement de l'habitacle ou dégivrage ou désembuage avant utilisation du véhicule en environnement très froid ou encore lorsqu'une montée très rapide de la température est souhaitée.

Dans le cas d'un véhicule électrique, la fonction de chauffage n'est plus réalisée par la circulation du liquide de refroidissement dans l'échangeur de chaleur.

On peut prévoir un circuit d'eau pour le chauffage de l'habitacle.

Ce mode de chauffage peut aussi s'avérer inadapté ou insuffisant pour garantir un chauffage rapide et efficace de l'habitacle du véhicule.

Par ailleurs, afin de réduire l'encombrement et le coût dû au circuit d'eau supplémentaire, il est également connu d'utiliser pour le véhicule électrique, une boucle de climatisation fonctionnant en mode pompe à chaleur. Ainsi, la boucle de climatisation permettant classiquement de refroidir un flux d'air à l'aide d'un fluide réfrigérant, est dans ce cas utilisée de façon à réchauffer le flux d'air. Il convient pour ce faire d'utiliser un évaporateur de la boucle de climatisation comme un condenseur.

Toutefois, ce mode de chauffage aussi peut s'avérer inadapté ou insuffisant. En effet, les performances de la boucle de climatisation en mode pompe à chaleur dépendent des conditions climatiques extérieures; et en cas d'air extérieur avec une température trop basse cet air ne peut pas être utilisé comme source d'énergie thermique.

Pour pallier ces inconvénients de l'art antérieur, une solution connue consiste à adjoindre à l'échangeur de chaleur ou au circuit d'eau ou encore à la boucle de climatisation, un dispositif de chauffage électrique additionnel.

Un tel dispositif de chauffage électrique peut être adapté pour chauffer en amont le liquide, tel que le liquide de refroidissement pour le moteur thermique, ou l'eau pour le circuit d'eau de chauffage de l'habitacle du véhicule électrique ou encore le fluide réfrigérant de la boucle de climatisation.

On connaît par exemple de tels dispositifs de chauffage électriques comprenant une pluralité d'éléments chauffants, tels que des éléments à coefficient de température positif ou PTC pour l'anglais "Positive Temperature Coefficient", reçus dans un boîtier de manière à définir une chambre de chauffage autour de la pluralité des éléments chauffants PTC et dans laquelle le liquide à chauffer circule.

Toutefois, de tels dispositifs de chauffage présentent un encombrement relativement important et en outre peuvent être assez lourds.

De plus, ces dispositifs de chauffage électriques connus peuvent présenter une perte de charge relativement importante qui ne rentrent pas en adéquation avec les valeurs de référence imposées par certains constructeurs automobiles.

En outre, certains dispositifs de chauffage connus peuvent présenter une inertie de chauffe importante limitant les performances thermiques. Les documents WO2011/054970 A2 et WO2010/021939 A1 décrivent par exemple des dispositifs de chauffage électrique de liquide pour véhicule automobile. L'invention a donc pour objectif de pallier au moins partiellement les inconvénients de l'art antérieur en proposant un dispositif de chauffage électrique de plus faible encombrement tout en limitant la perte de charge et l'inertie de chauffe.

À cet effet, l'invention a pour objet un dispositif de chauffage électrique de liquide pour véhicule automobile selon la revendication 1. Le dispositif de chauffage peut en outre comporter une ou plusieurs caractéristiques suivantes, prises séparément ou en combinaison :
- lesdits modules de chauffe comprennent respectivement un noyau et un moyen de chauffe entourant ledit noyau de façon à définir un circuit de guidage du liquide autour dudit noyau ;
- lesdits au moins un premier et un deuxième modules de chauffe définissent au moins deux circuits de guidage en série ;
- ledit dispositif comporte au moins un canal de communication entre les circuits de guidage desdits au moins un premier et un deuxième modules de chauffe ;
- lesdits circuits de guidage en série définissent un trajet sensiblement en « U » ;
- lesdits au moins un premier et un deuxième modules de chauffe définissent au moins deux circuits de guidages sensiblement parallèles ;
- ledit noyau d'au moins un module de chauffe comporte une cavité interne communiquant avec ledit circuit de guidage du liquide, et comprenant de l'air apte à se comprimer sous l'effet de l'expansion du liquide chauffé, de sorte que ladite cavité interne forme un vase d'expansion ;
- ledit noyau comprend un moyen de contrôle de l'expansion ;
- ledit moyen de contrôle de l'expansion comporte au moins un passage calibré à travers duquel ledit liquide est apte à circuler,
- ledit moyen de contrôle de l'expansion est configuré pour coulisser le long de ladite cavité interne dudit noyau ;
- ledit moyen de contrôle de l'expansion comporte un piston ;
- ledit dispositif comporte au moins une tubulure d'entrée de liquide et au moins une tubulure de sortie de liquide communiquant avec au moins un circuit de guidage défini par lesdits au moins un premier et un deuxième modules de chauffe ;
- ladite tubulure d'entrée communique avec le circuit de guidage dudit premier module de chauffe, et en ce que ladite tubulure de sortie communique avec le circuit de guidage dudit deuxième module de chauffe ;
- ladite tubulure d'entrée et/ou ladite tubulure de sortie est agencée dans ledit dispositif sensiblement parallèlement à un axe longitudinal d'un module de chauffe ;
- ladite tubulure d'entrée et ladite tubulure de sortie sont disposées sur un même côté dudit dispositif ;
- ladite tubulure d'entrée est disposée sur un premier côté dudit dispositif, et ladite tubulure de sortie est disposée sur un deuxième côté dudit dispositif opposé audit premier côté ;
- lesdites au moins une tubulure d'entrée et au moins une tubulure de sortie sont orientées dans le même sens ;
- lesdites au moins une tubulure d'entrée et au moins une tubulure de sortie sont orientées selon deux sens opposés ;
- ledit noyau d'un module de chauffe présente au moins une rainure sur sa face externe en regard dudit moyen de chauffe ;
- ledit noyau d'un module de chauffe comporte au moins un canal de circulation interne longitudinal.

L'invention concerne également un appareil de chauffage et/ou climatisation pour véhicule automobile, caractérisé en ce qu'il comporte un dispositif de chauffage électrique tel que défini précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente de façon schématique et simplifiée un appareil de chauffage de véhicule automobile comprenant un dispositif de chauffage électrique additionnel,
- la figure 2a est une vue en coupe de face du dispositif de chauffage selon un premier mode de réalisation,
- la figure 2b est une vue en coupe de côté du dispositif de chauffage de la figure 2a selon le premier mode de réalisation,
- la figure 3a représente de façon simplifiée et schématique, un module de chauffe du dispositif de chauffage faisant office de vase d'expansion,
- la figure 3b représente de façon simplifiée et schématique, un module de chauffe du dispositif de chauffage faisant office de vase d'expansion avec un moyen de contrôle de l'expansion selon une première variante,
- la figure 3c représente de façon simplifiée et schématique, un module de chauffe du dispositif de chauffage faisant office de vase d'expansion avec un moyen de contrôle de l'expansion selon une deuxième variante,
- la figure 4 est un schéma simplifié représentant une vue en coupe du dispositif de chauffage selon un deuxième mode de réalisation,
- la figure 5a illustre un dispositif de chauffage selon le deuxième mode de réalisation avec une vue en coupe d'un module de chauffe,
- la figure 5b est une vue représentant les éléments du dispositif de chauffage selon le deuxième mode de réalisation de la figure 5a,
- la figure 6 est une vue représentant les éléments du dispositif de chauffage selon le deuxième mode de réalisation avec les entrée et sortie de liquide en sens opposé,
- la figure 7 est un schéma simplifié représentant une vue en coupe du dispositif de chauffage selon un troisième mode de réalisation, et
- la figure 8 est un schéma simplifié représentant une vue en coupe du dispositif de chauffage selon une autre variante de réalisation.

Dans ces figures, les éléments sensiblement identiques portent les mêmes références.

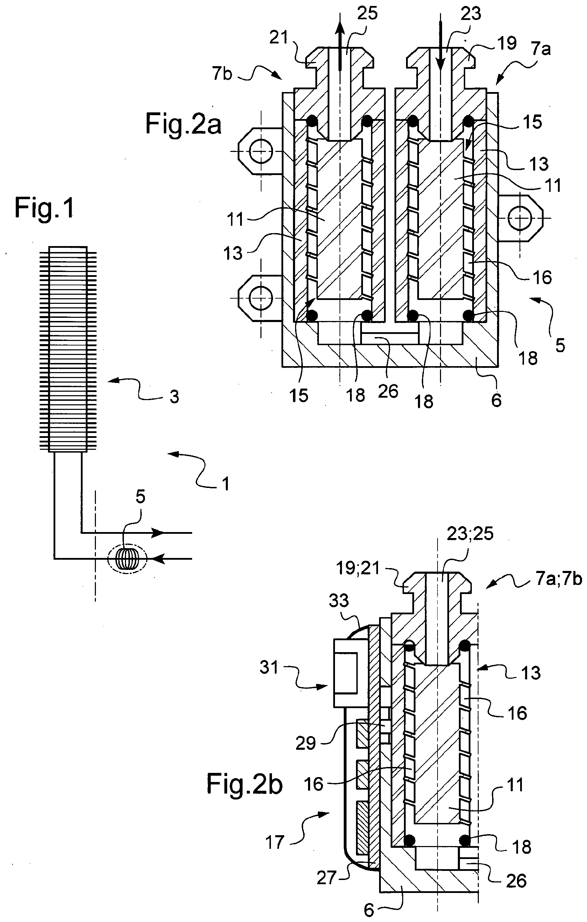

La figure 1 montre de façon schématique une partie d'un appareil de chauffage et/ou climatisation 1 de véhicule automobile, comprenant un circuit de chauffage d'eau 3 pour le chauffage de l'habitacle d'un véhicule électrique.

Cet appareil de chauffage comprend en amont du circuit de chauffage d'eau 3 un dispositif de chauffage électrique 5 additionnel pour chauffer l'eau avant son entrée dans le circuit de chauffage 3.

On a représenté ici le cas d'un circuit d'eau pour le chauffage de l'habitacle d'un véhicule électrique.

Bien entendu, on peut aussi prévoir que le dispositif de chauffage électrique 5 soit disposé en amont de l'évaporateur d'une boucle de climatisation apte à fonctionner en mode pompe à chaleur, de façon à chauffer le fluide réfrigérant.

On pourrait encore prévoir un tel dispositif de chauffage électrique 5 en amont d'un échangeur de chaleur utilisant le liquide de refroidissement du moteur thermique comme liquide caloporteur. On pourrait aussi prévoir un tel dispositif de chauffage électrique 5 en amont d'un échangeur de chaleur destiné à la régulation thermique d'un dispositif de stockage de l'énergie électrique, parfois qualifié d'ensemble de batteries, pour un véhicule à propulsion électrique ou hybride.

En référence aux figures 2a et 2b, on décrit maintenant plus en détail un premier mode de réalisation de ce dispositif de chauffage électrique 5.

Le dispositif de chauffage 5 comporte au moins un premier module de chauffe 7a et un deuxième module de chauffe 7b mis côte à côte de façon sensiblement parallèle.

Les modules de chauffe 7a,7b présentent une forme générale sensiblement cylindrique.

Les deux modules de chauffe 7a,7b sont mis côte à côte avec leurs axes longitudinaux A parallèles. Les axes longitudinaux A des modules de chauffe 7a,7b ne sont pas confondus et leurs prolongements ne se rencontrent pas.

Cette disposition côte à côte des modules de chauffe 7a,7b permet de réduire l'encombrement du dispositif de chauffage 5 dans le sens longitudinal.

De plus, le dispositif de chauffage 5 avec un tel agencement des modules de chauffe 7a,7b présente une inertie de chauffe moins élevée par rapport à certaines solutions connues de l'art antérieur.

En outre, la Demanderesse a constaté qu'avec un tel dispositif de chauffage 5 on obtient une perte de charge inférieure à 50 mbar à 1000L/h. Ces résultats permettent de répondre aux contraintes relatives à la perte de charge imposées par certains constructeurs automobiles.

Chaque module de chauffe 7a,7b est reçu dans un logement associé du dispositif de chauffage 5.

Un module de chauffe 7a,7b comprend un noyau central 11 et un moyen de chauffe 13 réalisé sous la forme d'une enceinte entourant le noyau central 11 de manière à définir un circuit de guidage 15 du liquide à chauffer entre le noyau central 11 et l'enceinte 13. Cette enceinte 13 comprend des éléments chauffants commandés par un système de commande 17 pour chauffer le liquide par échange de chaleur entre l'enceinte et le liquide circulant dans le circuit de guidage 15.

Le noyau central 11 et l'enceinte 13 peuvent être concentriques.

Ainsi, la surface externe du noyau central 11 et la surface interne de l'enceinte 13 définissent un volume de circulation du liquide à chauffer.

Selon le mode de réalisation illustré sur les figures 2a et 2b, chaque module de chauffe 7 comprend un circuit de guidage 15 du liquide entre le noyau 11 et l'enceinte 13.

On peut disposer des éléments de perturbation de l'écoulement du liquide dans le circuit de guidage 15 de façon à augmenter l'échange thermique entre le liquide et l'enceinte 13.

Le noyau central 11 peut être réalisé d'une seule pièce ou en variante en deux parties.

Le noyau central 11 peut être réalisé sous la forme d'un corps creux.

Le noyau central 11 est par exemple de forme sensiblement cylindrique.

On peut prévoir que le noyau 11 présente une section sensiblement constante ou au contraire évolutive.

Avec une section sensiblement constante du noyau central 11, le liquide s'écoule avec une vitesse constante dans le circuit de guidage 15.

Au contraire, avec une section évolutive la vitesse d'écoulement est modifiée le long du circuit de guidage 15.

En outre, selon le mode de réalisation illustré, le noyau 11 présente sur sa surface externe, c'est-à-dire en regard de la surface interne de l'enceinte 13, une rainure externe 16 sensiblement hélicoïdale. Du fait de cette rainure hélicoïdale 16, le circuit de guidage 15 définit un trajet sensiblement hélicoïdal.

Bien entendu, on pourrait prévoir en variante que la surface externe du noyau 11 sans rainure, de manière à définir un circuit de guidage axial parallèlement à l'axe longitudinal A.

Selon encore une autre variante non représentée, le noyau 11 peut présenter sur surface externe, une pluralité de rainures circulaires.

Dans ce cas, on prévoit un orifice de communication au niveau de chaque rainure circulaire de sorte que l'intérieur du noyau 11 communique avec le circuit de guidage 15. Ainsi, le liquide pénétrant dans un module de chauffe 7a,7b s'écoule à l'intérieur du noyau 11 et autour du noyau 11 de façon circulaire.

L'enceinte 13 est quant à elle également de forme sensiblement cylindrique.

Bien entendu, l'enceinte 13 est réalisée sous la forme d'un corps creux de façon à recevoir le noyau central 11 à l'intérieur de l'enceinte 13.

L'enceinte 13 peut par exemple présenter au moins une piste résistive connectée au système de commande 17 (cf figure 2b) des modules de chauffe 7a,7b.

La ou les pistes résistives sont par exemple réalisées par sérigraphie sur la surface externe de l'enceinte 13, c'est-à-dire opposée à la surface de l'enceinte 13 en regard du noyau central 11.

De plus, l'enceinte 13 peut comporter des moyens d'étanchéité 18 agencés à l'intérieur de l'enceinte 13 de chaque module de chauffe 7a,7b, au niveau des extrémités de l'enceinte 13.

Le dispositif de chauffage 5 comporte en outre au moins une entrée de liquide 19 et au moins une sortie 21 de liquide communiquant avec les circuits de guidage 15 pour permettre l'écoulement du liquide dans les modules de chauffe 7a,7b.

Ces entrée 19 et sortie 21 sont par exemple réalisées sous la forme de tubulures respectivement d'entrée 19 et de sortie 21.

Les tubulures d'entrée 19 et de sortie 21 sont par exemple respectivement agencées en saillie par rapport au dispositif de chauffage 5.

Selon le premier mode de réalisation, le dispositif de chauffe 5 comporte une tubulure d'entrée 19 communiquant avec le circuit de guidage 15 du premier module de chauffe 7a et une tubulure de sortie 21 communiquant avec le circuit de guidage 15 du deuxième module de chauffe 7b.

À cet effet, la tubulure d'entrée 19 présente un canal d'entrée 23 pour l'admission du liquide, ce canal d'entrée 23 débouche dans le circuit de guidage 15 du premier module de chauffe 7a. De même, la tubulure de sortie 21 présente un canal de sortie 25 pour l'évacuation du liquide, ce canal de sortie 25 communique avec le circuit de guidage 15 du deuxième module de chauffe 7b.

De plus, les canaux d'entrée 23 et de sortie 25 peuvent être respectivement ménagés dans les tubulures 19,21 de façon parallèle à l'axe longitudinal A de chaque module de chauffe 7a,7b.

Plus précisément, le canal d'entrée 23 et le canal de sortie 25 peuvent être respectivement coaxiaux au noyau central 11 du module de chauffe 7a,7b associé.

Par ailleurs, on peut agencer les tubulures d'entrée 19 et de sortie 21 sur un même côté du dispositif de chauffage 5 comme dans l'exemple illustré sur la figure 2a. De ce fait, le liquide suit une trajectoire sensiblement en « U ».

On prévoit en outre un canal de communication 26 reliant les deux circuits de guidage 15 des deux modules de chauffe 7a,7b. Ce canal de communication 26 est selon l'exemple illustré agencé en regard des extrémités libres des modules de chauffe 7a,7b, et tel que les circuits de guidage débouchent dans ce canal de communication 26.

Ainsi, comme l'illustre de façon schématique les flèches sur la figure 2a, le liquide entre dans le dispositif de chauffage 5 via la tubulure d'entrée 19 du côté du premier module de chauffe 7a. Le canal d'entrée 23 communiquant avec le circuit de guidage 15 défini dans le premier module de chauffe 7a, le liquide circule donc entre le noyau 11 et l'enceinte 13 du premier module de chauffe 7a.

Cette circulation se fait de manière sensiblement hélicoïdale selon l'exemple de réalisation du noyau 11 illustré. Comme décrit précédemment, on pourrait prévoir une circulation axiale ou encore sensiblement circulaire.

Le circuit de guidage 15 défini dans le premier module de chauffe 7a débouchant dans le canal de communication 26, le liquide passe ensuite dans le canal de communication 26 et est guidé dans le circuit de guidage 15 du deuxième module de chauffe 7b débouchant également avec le canal de communication 26.

De façon similaire, le liquide peut circuler de façon sensiblement hélicoïdale, axiale ou encore circulaire autour du noyau central 11 du deuxième module de chauffe 7b, avant de quitter le dispositif de chauffage 5 via le canal de sortie 25 de la tubulure de sortie 21.

Les circuits de guidages 15 des deux modules de chauffe 7a,7b sont donc en série.

Par ailleurs, les noyaux 11 étant réalisés sous la forme de corps creux, leurs cavités internes 12 peuvent faire office de vase d'expansion pour le liquide chauffé.

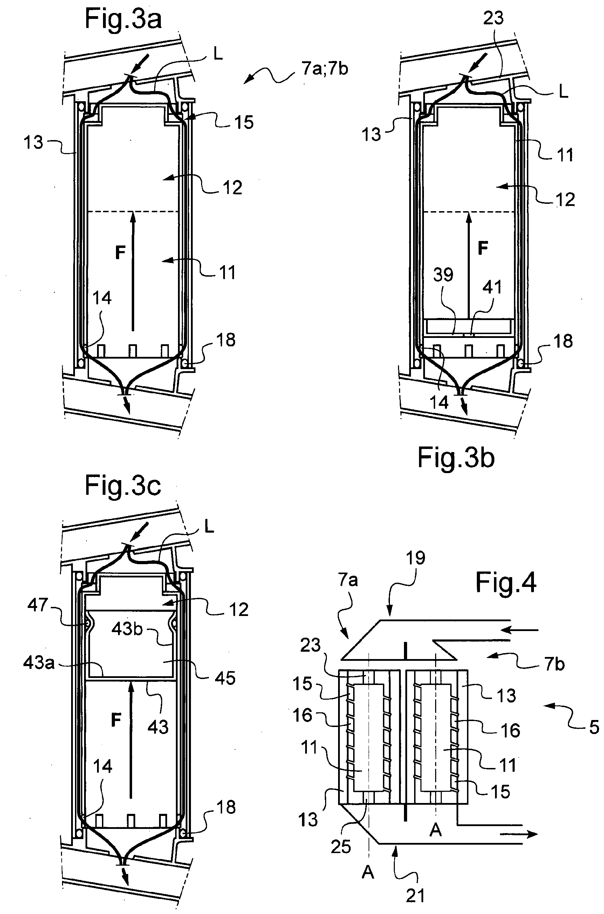

De telles zones de stockage du fluide caloporteur permettent au circuit hydraulique d'absorber l'expansion du fluide chauffé, comme représenté sur les figures 3a à 3c.

À cet effet, les cavités internes 12 contiennent de l'air dans leur partie supérieure. Cette partie supérieure est délimitée de façon schématique sur les figures 3a à 3c par la ligne en pointillés. La partie supérieure de la cavité interne 12 est la partie de la cavité interne directement adjacente au canal d'entrée 23 par exemple.

En outre, le noyau 11 présente au moins un orifice de communication 14 entre la cavité interne 12 et le circuit de guidage 15 autour du noyau 11, donc externe. Le liquide dans le circuit de guidage externe 15 est représenté de façon schématique par les lignes L.

Ainsi, l'air contenu ou « emprisonné » dans la partie supérieure de la cavité interne 12 est apte à se comprimer sous l'effet de l'expansion du liquide chauffé qui passe dans la cavité interne 12, comme l'illustre de façon schématique la flèche F.

De manière préférentielle, le noyau 11 comprend un moyen de contrôle de l'expansion, contrairement à la variante illustrée sur la figure 3a sans moyen de contrôle de l'expansion.

Selon un premier mode de réalisation représenté sur la figure 3b, ledit moyen de contrôle comporte une cloison 39 fixée à l'extrémité du noyau 11, définissant ainsi un volume interne du vase d'expansion, et pourvu d'au moins un passage 41 calibré au travers duquel le fluide caloporteur, à savoir le liquide chauffé, est apte à circuler.

Bien entendu, l'orifice de communication 14 entre la cavité interne 12 et le circuit de guidage externe 15 est agencé entre la cloison 39 et l'extrémité du noyau 11. Ainsi, le liquide provenant du circuit de guidage 15 passe à travers l'orifice de communication 39 avant de passer à travers le passage calibré 41 permettant de contrôler l'expansion du liquide chauffé.

Selon un second mode de réalisation représenté sur la figure 3c, ledit moyen de contrôle comporte une cloison 43 mobile apte à coulisser le long de la cavité interne 12 du noyau 11. Une telle cloison mobile 43 délimite une zone étanche 45 contenant de l'air qui est comprimé sous l'effet de l'expansion de l'eau par exemple. La cloison mobile 43 est assimilable à un piston qui comporte une paroi de fond 43a de forme sensiblement cylindrique et une paroi latérale 43b tubulaire disposée en périphérie de la paroi de fond 43a. La paroi latérale 43b est pourvue de préférence d'un moyen d'étanchéité tel qu'un joint d'étanchéité 47 de sorte que l'étanchéité est assurée entre la cloison mobile 43 et le noyau 11.

Sous l'effet de l'expansion du liquide chauffé, tel que l'eau, le volume interne du noyau 11 contenant de l'air est réduit, ce qui tend à comprimer l'air qu'il contient.

En se référant à nouveau à la figure 2b, le système de commande 17 des éléments chauffants portés par l'enceinte 13 est quant à lui disposé sur une paroi longitudinale du dispositif 5.

Ce système de commande 17 peut par exemple comporter au moins un support de circuit électrique tel qu'une carte à circuit imprimé 27, PCB en anglais pour "Printed circuit board", et des composants électroniques et/ou électriques 29 portés par le support 27. Ces composants électroniques et/ou électriques peuvent par exemple comporter un microcontrôleur et des contacts électriques connectés aux pistes résistives de l'enceinte 7b. Les contacts électriques sont par exemple portés par une face opposée du support PCB 27 à la face portant par exemple le microcontrôleur.

Le support 27 peut encore porter au moins un connecteur 31 d'alimentation et de signal.

Le dispositif de chauffage 5 peut comporter en outre un couvercle de protection 33 du système de commande 17. Ce couvercle 33 présente une ouverture pour laisser passer le connecteur 31.

Pour cet exemple de réalisation, on peut prévoir une puissance de l'ordre de 2kW pour chaque enceinte 13 des deux modules de chauffe 7a,7b.

Un tel agencement du système de commande 17 participe à la compacité du dispositif de chauffage 5.

En se référant aux figures 4 à 6, on décrit un deuxième mode de réalisation.

Ce deuxième mode de réalisation diffère du premier mode de réalisation précédemment décrit en ce que les deux modules de chauffe 7a,7b définissent deux circuits de guidage 15 parallèles et non plus en série.

À cet effet, un module de chauffe 7a,7b comporte à la fois un canal d'entrée 23 sur un premier côté du module de chauffe 7a,7b, et un canal de sortie 25 sur un deuxième côté du module de chauffe 7 opposé au premier côté. Le liquide circule le long du circuit de guidage 15 du module de chauffe 7a,7b; sensiblement parallèlement à l'axe longitudinal A du module de chauffe 7a,7b.

En outre l'entrée 19 pour les deux modules de chauffe 7a,7b est placée du même côté du dispositif 5 et la sortie 21 est placée pour les deux modules de chauffe 7a,7b du côté opposé, de sorte que le liquide circule dans le même sens dans les deux modules de chauffe 7a,7b.

On peut prévoir notamment une entrée 19 commune pour les deux modules de chauffe 7a,7b ainsi qu'une sortie commune 21 pour les deux modules de chauffe 7a,7b.

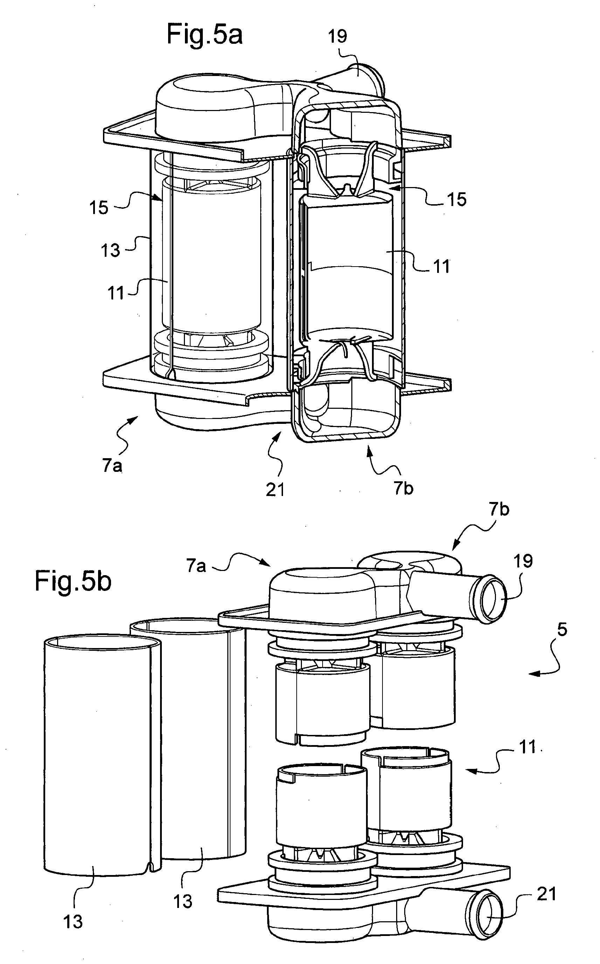

Plus précisément, en se référant aux figures 5a à 6, on peut prévoir une tubulure d'entrée 19 commune pour les deux modules de chauffe 7a,7b qui se divise en deux de façon à alimenter respectivement chaque module de chauffe 7a,7b. De façon similaire, on peut prévoir une tubulure de sortie 21 commune qui se divise en deux de façon à recueillir le liquide en sortie de chaque module de chauffe 7a,7b.

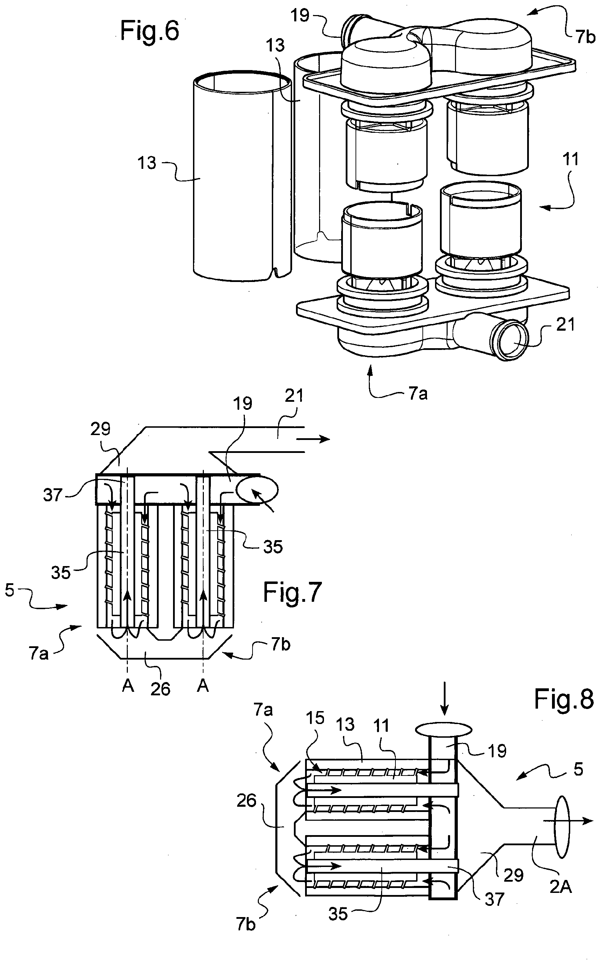

Comme l'illustrent les figures 4, 5a et 5b, on peut prévoir que l'entrée 19 et la sortie 21 soient orientées dans le même sens ou au contraire selon la variante de la figure 6 qu'elles soient orientées selon deux sens opposés.

Par ailleurs, de façon similaire au premier mode de réalisation, les noyaux 11 des deux modules de chauffe 7a,7b peuvent présenter une cavité interne 12 jouant avantageusement le rôle de vase d'expansion, en permettant d'absorber les variations de volume du liquide dues au chauffage de ce liquide. En effet, la cavité interne 12 de chaque noyau 11 contient de l'air dans sa partie supérieure apte à se comprimer sous l'effet de l'expansion du liquide. Comme précédemment, on peut prévoir un moyen de contrôle de l'expansion, tel qu'un passage calibré ou une cloison mobile apte à coulisser le long de la cavité interne 12 du noyau 11 selon l'expansion du fluide comme un piston.

On décrit maintenant en référence aux figures 7 et 8, un troisième mode de réalisation. Sur ces figures, les flèches illustrent de façon schématique le trajet du liquide dans le dispositif de chauffage 5.

Ce troisième mode de réalisation diffère du deuxième mode de réalisation par le fait que pour chaque module de chauffe 7a,7b, un canal de circulation interne 35 du noyau 11 permet de définir un circuit de guidage interne à l'intérieur du noyau 11.

Selon l'exemple illustré, le canal de circulation interne 35 est ménagé sensiblement au centre du noyau central 11.

En outre, selon les exemples de réalisation illustrés, on peut prévoir que la tubulure d'entrée 19 et la tubulure de sortie 21 soient agencées du même côté du dispositif de chauffage 5.

Les deux tubulures 19,21 peuvent par exemple être agencées l'une au dessus de l'autre.

Pour ce faire, on peut agencer la tubulure d'entrée 19 sensiblement perpendiculairement aux axes longitudinaux A des modules de chauffe 7a,7b, et la tubulure de sortie 21 sur la tubulure d'entrée 19.

Dans ce cas, les canaux de circulation 35 internes présentent respectivement un prolongement 37 qui traverse la tubulure d'entrée 19 et débouche dans la tubulure de sortie 21. Les circuits de guidage 15 autour des noyaux 11 communiquent quant à eux avec le canal d'entrée 23 de la tubulure d'entrée 19.

Dans l'exemple illustré, la tubulure de sortie 21 est réalisée d'une seule pièce avec un couvercle 29 qui coiffe la tubulure d'entrée 19 et dans lequel débouchent les prolongements 37 des canaux de circulation internes 35.

La tubulure 21 peut être disposée sensiblement perpendiculairement aux axes longitudinaux A des modules de chauffe 7a,7b, de façon similaire à la tubulure d'entrée 19 (cf figure 7). Cette tubulure de sortie 21 peut être orientée dans le même sens que la tubulure d'entrée 19 ou dans le sens opposé.

Selon la variante illustrée sur la figure 8, la tubulure de sortie 21 est disposée sensiblement parallèlement aux axes longitudinaux A des modules de chauffe 7a,7b.

Par ailleurs, on prévoit pour chaque module de chauffe 7a,7b un accès du circuit de guidage 15 vers le canal de circulation interne 35, de sorte que le liquide en sortie du circuit de guidage 15 passe dans le canal de circulation interne 35.

Selon l'exemple illustré, le canal de communication 26 agencé de façon à relier les deux circuits de guidage 15 définis dans les deux modules de chauffe 7a,7b, permet en outre cet accès du liquide en sortie des circuits de guidage 15 dans les canaux de circulation internes 35 respectifs.

Ainsi, le liquide introduit dans le dispositif de chauffage 5 via la tubulure d'entrée 19 s'écoule dans les circuits de guidage 15 respectifs autour des noyaux 11 de chaque module de chauffe 7a,7b.

De façon similaire aux premier et deuxième modes de réalisation, l'écoulement du liquide autour de chaque noyau 11 peut se faire de façon sensiblement hélicoïdale, ou axiale ou encore circulaire.

En sortie des circuits de guidage 15, le liquide est introduit dans les canaux de circulation internes 35 avant d'être évacué via la tubulure de sortie 21.

Ainsi un dispositif de chauffage 5 comprenant au moins deux modules de chauffe 7a,7b mis côte à côte présente un encombrement réduit dans le sens longitudinal par rapport à certaines solutions de l'art antérieur, tout en présentant une faible inertie de chauffe et en permettant une réduction de la perte de charge.

En outre, l'agencement des modules de chauffe 7a,7b peut être adapté pour un écoulement en série ou pour des écoulements parallèles dans les deux modules de chauffe 7a,7b.

Enfin, l'écoulement du liquide peut suivre une trajectoire sensiblement axiale, hélicoïdale ou encore circulaire selon les performances requises.

## Revendications

1. Dispositif de chauffage électrique de liquide pour véhicule automobile, ledit dispositif de chauffage comprenant au moins un premier (7a) et un deuxième (7b) module de chauffe dudit liquide définissant au moins un circuit de guidage (15) du liquide à chauffer, lesdits modules de chauffe (7a, 7b) présentant respectivement une forme générale sensiblement cylindrique et sont agencés côte à côte de façon parallèle, **caractérisé en ce que** lesdits modules de chauffe (7a, 7b) comprennent chacun respectivement un noyau central distinct (11), de forme sensiblement cylindrique, et un moyen de chauffe distinct (13) réalisé sous la forme d'une enceinte, de forme sensiblement cylindrique, entourant le noyau central (11) de manière à définir un circuit de guidage (15) du liquide à chauffer entre le noyau central (11) et l'enceinte (13), chaque module de chauffe (7a, 7b) étant reçu dans un logement associé du dispositif de chauffage (5), les axes longitudinaux A des modules de chauffe (7a, 7b) étant parallèles et distincts l'un de l'autre, et chaque enceinte (13) comprenant des éléments chauffants commandés par un système de commande (17) pour chauffer le liquide par échange de chaleur entre l'enceinte (13) et le liquide circulant dans le circuit de guidage (15).

2. Dispositif selon la revendication 1, **caractérisé en ce que** lesdits au moins un premier (7a) et un deuxième (7b) modules de chauffe définissent au moins deux circuits de guidage (15) en série.

3. Dispositif selon la revendication 2, **caractérisé en ce qu'**il comporte au moins un canal de communication (26) entre les circuits de guidage (15) desdits au moins un premier (7a) et un deuxième (7b) module de chauffe.

4. Dispositif selon la revendication 3, **caractérisé en ce que** lesdits circuits de guidage (15) en série définissent un trajet sensiblement en « U ».

5. Dispositif selon la revendication 1, **caractérisé en ce que** lesdits au moins un premier (7a) et un deuxième (7b) modules de chauffe définissent au moins deux circuits de guidages (15) sensiblement parallèles.

6. Dispositif selon l'une quelconque des revendications 1 à 5, **caractérisé en ce que** ledit noyau (11) d'au moins un module de chauffe (7a, 7b) comporte une cavité interne (12) communiquant avec ledit circuit de guidage (15) du liquide, et comprenant de l'air apte à se comprimer sous l'effet de l'expansion du liquide chauffé, de sorte que ladite cavité interne (12) forme un vase d'expansion.

7. Dispositif selon la revendication 6, **caractérisé en ce que** ledit noyau (11) comprend un moyen de contrôle de l'expansion (39, 41, 43).

8. Dispositif selon la revendication 7, **caractérisé en ce que** ledit moyen de contrôle de l'expansion (39, 41) comporte au moins un passage calibré (41) à travers duquel ledit liquide est apte à circuler.

9. Dispositif selon la revendication 7, **caractérisé en ce que** ledit moyen de contrôle de l'expansion (43) est configuré pour coulisser le long de ladite cavité interne (12) dudit noyau. (11)

10. Dispositif selon l'une quelconque des revendications précédentes, **caractérisé en ce qu'**il comporte au moins une tubulure d'entrée (19) de liquide et au moins une tubulure de sortie (21) de liquide communiquant avec au moins un circuit de guidage (15) défini par lesdits au moins un premier (7a) et un deuxième (7b) modules de chauffe.

11. Dispositif selon l'une des revendications 2 à 4, prise en combinaison avec la revendication 10, **caractérisé en ce que** ladite tubulure d'entrée (19) communique avec le circuit de guidage (15) dudit premier module de chauffe (7a), et **en ce que** ladite tubulure de sortie (21) communique avec le circuit de guidage (15) dudit deuxième module de chauffe (7b).

12. Dispositif selon l'une des revendications 10 ou 11, **caractérisé en ce que** ladite tubulure d'entrée (19) et/ou ladite tubulure de sortie (21) est agencée dans ledit dispositif sensiblement parallèlement à un axe longitudinal (A) d'un module de chauffe (7a, 7b).

13. Dispositif selon l'une quelconque des revendications 10 à 12, **caractérisé en ce que** ladite tubulure d'entrée (19) et ladite tubulure de sortie (21) sont disposées sur un même côté dudit dispositif.

14. Dispositif selon l'une quelconque des revendications 10 à 12, **caractérisé en ce que** ladite tubulure d'entrée (19) est disposée sur un premier côté dudit dispositif, et **en ce que** ladite tubulure de sortie (21) est disposée sur un deuxième côté dudit dispositif opposé audit premier côté.

15. Dispositif selon l'une quelconque des revendications 8 à 12, **caractérisé en ce que** lesdites au moins une tubulure d'entrée (19) et au moins une tubulure de sortie (21) sont orientées dans le même sens.

16. Dispositif selon l'une quelconque des revendications 10 à 14, **caractérisé en ce que** lesdites au moins une tubulure d'entrée (19) et au moins une tubulure de sortie (21) sont orientées selon deux sens opposés.

17. Dispositif selon l'une quelconque des revendications précédentes, **caractérisé en ce que** ledit noyau (11) d'un module de chauffe (7a, 7b) présente au moins une rainure (16) sur sa face externe en regard dudit moyen de chauffe (13).

18. Dispositif selon l'une quelconque des revendications précédentes, **caractérisé en ce que** ledit noyau (11) d'un module de chauffe (7a, 7b) comporte au moins un canal de circulation interne (35) longitudinal.

19. Appareil de chauffage et/ou climatisation pour véhicule automobile, **caractérisé en ce qu'**il comprend au moins un dispositif de chauffage selon l'une quelconque des revendications précédentes.

## Patentansprüche

1. Vorrichtung zum elektrischen Aufheizen von Flüssigkeit für ein Kraftfahrzeug, wobei die Heizvorrichtung mindestens ein erstes (7a) und ein zweites (7b) Modul zum Aufheizen der Flüssigkeit umfasst, welche mindestens einen Kreislauf (15) zur Führung der aufzuheizenden Flüssigkeit definiert, wobei die Heizmodule (7a, 7b) jeweils eine allgemeine, im Wesentlichen zylindrische Form aufweisen und nebeneinander in paralleler Weise angeordnet sind, **dadurch gekennzeichnet, dass** die Heizmodule (7a, 7b) jeweils entsprechend einen zentralen, separaten Kern (11) von im Wesentlichen zylindrischer Form und ein separates Heizmittel (13) umfassen, welches in der Form eines Gehäuses von im Wesentlichen zylindrischer Form ausgeführt ist, welches den zentralen Kern (11) umgibt, um einen Kreislauf (15) zum Führen der aufzuheizenden Flüssigkeit zwischen dem zentralen Kern (11) und dem Gehäuse (13) zu definieren, wobei jedes Heizmodul (7a, 7b) in einer der Heizvorrichtung (5) zugeordneten Aufnahme aufgenommen ist, wobei die longitudinalen Achsen (A) der Heizmodule (7a, 7b) parallel und verschieden zueinander sind und wobei jedes Gehäuse (13) Heizelemente umfasst, welche von einem Steuersystem (17) gesteuert werden, um die Flüssigkeit durch Wärmeaustausch zwischen dem Gehäuse (13) und der in dem Führungskreislauf (15) strömenden Flüssigkeit aufzuheizen.

2. Vorrichtung nach Anspruch 1, **dadurch gekennzeichnet, dass** das mindestens eine erste (7a) und eine zweite (7b) Heizmodul mindestens zwei Führungskreisläufe (15) in Reihe definieren.

3. Vorrichtung nach Anspruch 2, **dadurch gekennzeichnet, dass** sie mindestens einen Verbindungskanal (26) zwischen den Führungskreisläufen (15) des mindestens einen ersten (7a) und einen zweiten (7b) Heizmoduls umfasst.

4. Vorrichtung nach Anspruch 3, **dadurch gekennzeichnet, dass** die Führungskreisläufe (15) in Reihe eine im Wesentlichen U-förmige Strecke definieren.

5. Vorrichtung nach Anspruch 1, **dadurch gekennzeichnet, dass** das mindestens eine erste (7a) und eine zweite (7b) Heizmodul mindestens zwei im Wesentlichen parallele Führungskreisläufe (15) definieren.

6. Vorrichtung nach einem der Ansprüche 1 bis 5, **dadurch gekennzeichnet, dass** der Kern (11) von mindestens einem Heizmodul (7a, 7b) einen inneren Hohlraum (12) umfasst, welcher mit dem Kreislauf (15) zum Führen der Flüssigkeit kommuniziert und Luft umfasst, welche geeignet ist, sich unter der Einwirkung der Ausdehnung der aufgeheizten Flüssigkeit zu verdichten, so dass der innere Hohlraum (12) einen Ausgleichsbehälter bildet.

7. Vorrichtung nach Anspruch 6, **dadurch gekennzeichnet, dass** der Kern (11) ein Mittel zur Steuerung der Ausdehnung (39, 41, 43) umfasst.

8. Vorrichtung nach Anspruch 7, **dadurch gekennzeichnet, dass** das Mittel zur Steuerung der Ausdehnung (39, 41) mindestens einen kalibrierten Durchlass (41) umfasst, durch welchen die Flüssigkeit zu strömen fähig ist.

9. Vorrichtung nach Anspruch 7, **dadurch gekennzeichnet, dass** das Mittel zur Steuerung der Ausdehnung (43) dafür ausgelegt ist, um entlang des inneren Hohlraums (12) des Kerns (11) zu gleiten.

10. Vorrichtung nach einem der vorhergehenden Ansprüche, **dadurch gekennzeichnet, dass** sie mindestens eine Leitung zum Einlassen (19) von Flüssigkeit und mindestens eine Leitung zum Auslassen (21) von Flüssigkeit umfasst, welche mit mindestens einem Führungskreislauf (15) kommunizieren, welcher von dem mindestens einen ersten (7a) und einen zweiten (7b) Heizmodul definiert wird.

11. Vorrichtung nach einem der Ansprüche 2 bis 4 in Verbindung mit Anspruch 10, **dadurch gekennzeichnet, dass** die Eintrittsleitung (19) mit dem Führungskreislauf (15) des ersten Heizmoduls (7a) kommuniziert und dass die Austrittsleitung (21) mit dem Führungskreislauf (15) des zweiten Heizmoduls (7b) kommuniziert.

12. Vorrichtung nach einem der Ansprüche 10 oder 11, **dadurch gekennzeichnet, dass** die Eintrittsleitung (19) und/oder die Austrittsleitung (21) im Wesentlichen parallel zu einer longitudinalen Achse (A) eines Heizmoduls (7a, 7b) in der Vorrichtung angeordnet ist.

13. Vorrichtung nach einem der Ansprüche 10 bis 12, **dadurch gekennzeichnet, dass** die Eintrittsleitung (19) und die Austrittsleitung (21) an einer gleichen Seite der Vorrichtung angeordnet sind.

14. Vorrichtung nach einem der Ansprüche 10 bis 12, **dadurch gekennzeichnet, dass** die Eintrittsleitung (19) an einer ersten Seite der Vorrichtung angeordnet ist und dass die Austrittsleitung (21) an einer zweiten, der ersten Seite gegenüberliegenden Seite der Vorrichtung angeordnet sind.

15. Vorrichtung nach einem der Ansprüche 8 bis 12, **dadurch gekennzeichnet, dass** die mindestens eine Eintrittsleitung (19) und mindestens eine Austrittsleitung (21) in die gleiche Richtung ausgerichtet sind.

16. Vorrichtung nach einem der Ansprüche 10 bis 14, **dadurch gekennzeichnet, dass** die mindestens eine Eintrittsleitung (19) und mindestens eine Austrittsleitung (21) gemäß zwei entgegengesetzten Richtungen ausgerichtet sind.

17. Vorrichtung nach einem der vorhergehenden Ansprüche, **dadurch gekennzeichnet, dass** der Kern (11) eines Heizmoduls (7a, 7b) mindestens eine Nut (16) auf ihrer äußeren Fläche gegenüber dem Heizmittel (13) aufweist.

18. Vorrichtung nach einem der vorhergehenden Ansprüche, **dadurch gekennzeichnet, dass** der Kern (11) eines Heizmoduls (7a, 7b) mindestens einen longitudinalen, inneren Strömungskanal (35) umfasst.

19. Heiz- und/oder Klimatisierungsgerät für ein Kraftfahrzeug, **dadurch gekennzeichnet, dass** es mindestens eine Heizvorrichtung nach einem der vorhergehenden Ansprüche umfasst

## Claims

1. Electrical liquid-heating device for a motor vehicle, the said heating device comprising at least one first (7a) and one second (7b) heating module for the said liquid defining at least one guide circuit (15) for the liquid to be heated, the said heating modules (7a, 7b) respectively having a substantially cylindrical general shape and being arranged side by side in parallel, **characterized in that** the said heating modules (7a, 7b) each respectively comprise a separate central core (11), of substantially cylindrical shape, and a separate heating means (13) produced in the form of an enclosure, of substantially cylindrical shape, surrounding the central core (11) so as to define a guide circuit (15) for the liquid to be heated between the central core (11) and the enclosure (13), each heating module (7a, 7b) being received in an associated housing of the heating device (5), the longitudinal axes A of the heating modules (7a, 7b) being parallel to and separate from one another, and each enclosure (13) comprising heating elements controlled by a control system (17) to heat the liquid by heat exchange between the enclosure (13) and the liquid circulating in the guide circuit (15).

2. Device according to Claim 1, **characterized in that** the said at least one first (7a) and one second (7b) heating module define at least two guide circuits (15) in series.

3. Device according to Claim 2, **characterized in that** it comprises at least one communication duct (26) between the guide circuits (15) for the said at least one first (7a) and one second (7b) heating module.

4. Device according to Claim 3, **characterized in that** the said guide circuits (15) in series define a substantially "U"-shaped path.

5. Device according to Claim 1, **characterized in that** the said at least one first (7a) and one second (7b) heating module define at least two substantially parallel guide circuits (15).

6. Device according to any one of Claims 1 to 5, **characterized in that** the said core (11) of at least one heating module (7a, 7b) comprises an internal cavity (12) communicating with the said guide circuit (15) for the liquid, and comprising air capable of being compressed under the effect of the expansion of the heated liquid, with the result that the said internal cavity (12) forms an expansion tank.

7. Device according to Claim 6, **characterized in that** the said core (11) comprises a means (39, 41, 43) for controlling the expansion.

8. Device according to Claim 7, **characterized in that** the said means (39, 41) for controlling the expansion comprises at least one calibrated passage (41) through which the said liquid is able to circulate.

9. Device according to Claim 7, **characterized in that** the said means (43) for controlling the expansion is configured to slide along the said internal cavity (12) of the said core (11).

10. Device according to any one of the preceding claims, **characterized in that** it comprises at least one liquid inlet nozzle (19) and at least one liquid outlet nozzle (21) communicating with at least one guide circuit (15) defined by the said at least one first (7a) and one second (7b) heating module.

11. Device according to one of Claims 2 to 4, taken in combination with Claim 10, **characterized in that** the said inlet nozzle (19) communicates with the guide circuit (15) of the said first heating module (7a), and **in that** the said outlet nozzle (21) communicates with the guide circuit (15) of the said second heating module (7b).

12. Device according to either of Claims 10 and 11, **characterized in that** the said inlet nozzle (19) and/or the said outlet nozzle (21) are/is arranged in the said device substantially parallel to a longitudinal axis (A) of a heating module (7a, 7b) .

13. Device according to any one of Claims 10 to 12, **characterized in that** the said inlet nozzle (19) and the said outlet nozzle (21) are arranged on the same side of the said device.

14. Device according to any one of Claims 10 to 12, **characterized in that** the said inlet nozzle (19) is arranged on a first side of the said device, and **in that** the said outlet nozzle (21) is arranged on a second side of the said device opposite to the said first side.

15. Device according to any one of Claims 8 to 12, **characterized in that** the said at least one inlet nozzle (19) and at least one outlet nozzle (21) are oriented in the same direction.

16. Device according to any one of Claims 10 to 14, **characterized in that** the said at least one inlet nozzle (19) and at least one outlet nozzle (21) are oriented in two opposite directions.

17. Device according to any one of the preceding claims, **characterized in that** the said core (11) of a heating module (7a, 7b) has at least one groove (16) on its outer face facing the said heating means (13).

18. Device according to any one of the preceding claims, **characterized in that** the said core (11) of a heating module (7a, 7b) comprises at least one longitudinal internal circulation duct (35).

19. Heating and/or air-conditioning unit for a motor vehicle, **characterized in that** it comprises at least one heating device according to any one of the preceding claims.
